# EUROPEAN PATENT APPLICATION

(11) **EP 2 613 544 A1**
(43) Date of publication of application: **10.07.2013**
(21) Application number: 12179347.5
(22) Date of filing: 06.08.2012
(51) Int. Cl.: H04N 21/41, H04N 21/422, H04N 21/436, H04N 21/4782, G06F 3/00, H04N 21/485

(54) **Switching a user input operation menu mode on an electronic apparatus controlling an external apparatus in accordance with a state of the external apparatus**

(30) Priority: 06.01.2012 JP 2012001548
(71) Applicant: Kabushiki Kaisha Toshiba, Tokyo 105-8001 (JP)
(72) Inventor: Yamashita, Joji, Tokyo 105-8001 (JP)
(74) Representative: HOFFMANN EITLE

(57) **Abstract**

According to one embodiment, an electronic apparatus, such as mobile terminal with a touchscreen, is configured to control an external apparatus, such as a television apparatus. The electronic apparatus includes, a communicator (272) configured to communicate with the external apparatus, a first operation module (235, 261) configured to display a first operation menu in a display and transmit a signal to the external apparatus in accordance with an operation on the first operation menu, a second operation module (235, 261) configured to display a second operation menu for a pointer operation in the display and transmit a signal to the external apparatus in accordance with an operation on the second operation screen, a recognition module (250) configured to recognize a state of the external apparatus, and a controller (250) configured to control in such a manner the first operation module and the second operation module that they are switched in accordance with a recognition result obtained by the recognition module.

## Description

Embodiments described herein relate generally to electronic apparatus and controlling method for electronic apparatus.
apparatus that can reproduce video contents, e.g., movies, television programs, or games have conventionally generally become widespread.

Further, there has been put into practical use an electronic apparatus which comprises a display that displays various kinds of information and a touch sensor that generates a signal in response to an operation performed by a user, wirelessly transmits the signal generated by the touch sensor to the above-described content reproduction apparatus, and remotely controls the content reproduction apparatus.

There is a demand of operating the content reproduction apparatus and the electronic apparatus that remotely controls the content reproduction apparatus in cooperation with each other and further saving a user the trouble.

A general architecture that implements the various features of the embodiments will now be described with reference to the drawings. The drawings and the associated descriptions are provided to illustrate the embodiments and not to limit the scope of the invention.
FIG. 1 is an exemplary view showing an electronic apparatus according to an embodiment.
FIG. 2 is an exemplary view showing the electronic apparatus according to the embodiment.
FIG. 3 is an exemplary view showing the electronic apparatus according to the embodiment.
FIG. 4 is an exemplary view showing the electronic apparatus according to the embodiment.
FIG. 5 is an exemplary view showing the electronic apparatus according to the embodiment.
FIG. 6 is an exemplary view showing the electronic apparatus according to the embodiment.
FIG. 7 is an exemplary view showing the electronic apparatus according to the embodiment.
FIG. 8 is an exemplary view showing the electronic apparatus according to the embodiment.
FIG. 9 is an exemplary view showing the electronic apparatus according to the embodiment.
FIG. 10 is an exemplary view showing the electronic apparatus according to the embodiment.
FIG. 11 is an exemplary view showing the electronic apparatus according to the embodiment.
FIG. 12 is an exemplary view showing the electronic apparatus according to the embodiment.

Various embodiments will be described hereinafter with reference to the accompanying drawings. In general, according to one embodiment, an electronic apparatus configured to control an external apparatus, the electronic apparatus comprises, a communicator configured to communicate with the external apparatus, a first operation module configured to display a first operation menu in a display and transmit a signal to the external apparatus in accordance with an operation on the first operation menu, a second operation module configured to display a second operation menu for a pointer operation in the display and transmit a signal to the external apparatus in accordance with an operation on the second operation screen, a recognition module configured to recognize a state of the external apparatus, and a controller configured to control in such a manner the first operation module and the second operation module are switched in accordance with a recognition result obtained by the recognition module.

An electronic apparatus and a controlling method for an electric apparatus according to an embodiment will now be described hereinafter in detail with reference to the drawings.

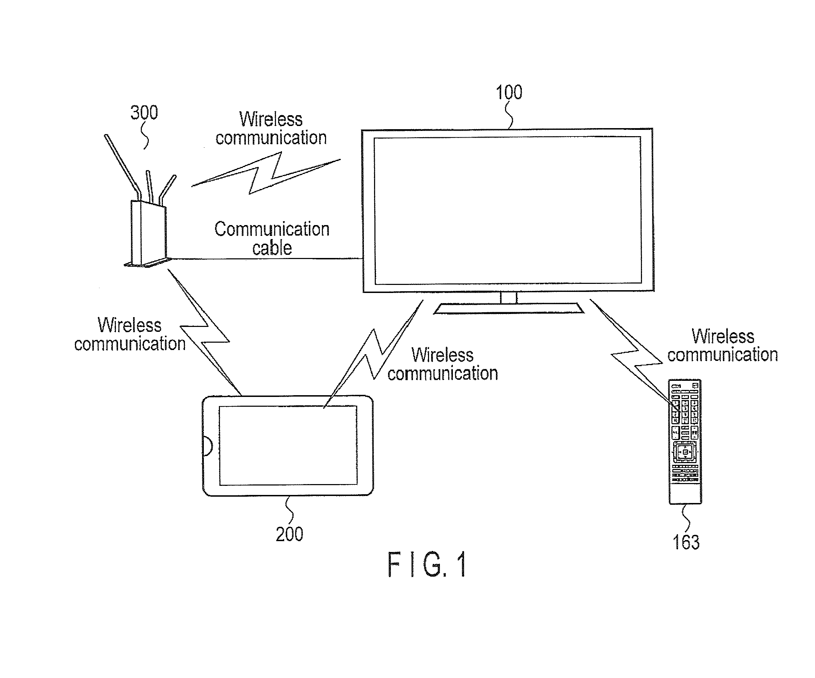

FIG. 1 shows an example of a system constituted of electronic apparatuses. This system has, e.g., a content reproduction apparatus 100, a mobile terminal 200, a wireless communication terminal 300, and others.

The content reproduction apparatus 100 is an electronic apparatus such as a broadcast reception apparatus that can reproduce, e.g., a broadcast signal or video contents stored in a storage medium. It is to be noted that the content reproduction apparatus 100 is assumed to be a broadcast reception apparatus 100 in the following description. Furthermore, the broadcast reception apparatus 100 comprises a remote controller 163, the mobile terminal 200, and a communicator configured to communicate with the wireless communication terminal 300.

The mobile terminal 200 is an electronic apparatus comprising a display, an operation module, and a communicator. The mobile terminal 200 is, e.g., a mobile phone terminal, a tablet PC, a mobile music player, or any other electronic apparatus.

The wireless communication terminal 300 comprises the mobile terminal 200 and a communicator configured to wirelessly communicate with the wireless communication terminal 300. For example, the wireless communication terminal 300 functions as an access point for wireless communication. That is, the wireless communication terminal 300 can communicate with the broadcast reception apparatus 100 in a wireless manner or through a communication cable such as an LAN cable. Additionally, the wireless communication terminal 300 can wirelessly communicate with the mobile terminal 200. That is, the broadcast reception apparatus 100, the mobile terminal 200, and the wireless communication terminal 300 are connected with each other via a communication protocol (e.g., IP) that enables interactive communication.

For example, the broadcast reception apparatus 100 and the mobile terminal 200 have a function of communicating with the wireless communication terminal 300 based on IEEE802.11b/g/n and the like. Further, the broadcast reception apparatus 100 and the mobile terminal 200 may have a function of directly wirelessly communicating with each other. That is, the broadcast reception apparatus 100 and the mobile terminal 200 can transmit/receive data through the wireless communication terminal 300 or directly.

It is to be noted that the mobile terminal 200 can transmit a control signal to the broadcast reception apparatus 100 based on wireless communication. That is, the mobile terminal 200 can function as a control apparatus that controls the broadcast reception apparatus 100 (an apparatus to be controlled). It is to be noted that the apparatus to be controlled will be referred to as a controlled apparatus. The broadcast reception apparatus 100 (the controlled apparatus) executes processing associated with a control signal (a control command) from the control apparatus that controls. Furthermore, the broadcast reception apparatus 100 as the controlled apparatus transmits its own current operation status to the control apparatus. The broadcast reception apparatus 100 transmits an operation status at either timing associated with an event on the controlled apparatus side or timing as periodic notification.

For example, the mobile terminal 200 periodically performs polling with respect to the broadcast reception apparatus 100 based on wireless communication. As a result, the mobile terminal 200 can recognize a state of the broadcast reception apparatus 100. That is, when the broadcast reception apparatus 100 receives a command concerning the polling from the mobile terminal 200, it returns information concerning a connection apparatus, information concerning a running application, or any other information to the mobile terminal 200. As a result, the mobile terminal 200 can recognize the information concerning the connection apparatus connected to the broadcast reception apparatus 100, the information concerning the application executed by the broadcast reception apparatus 100, or any other information.

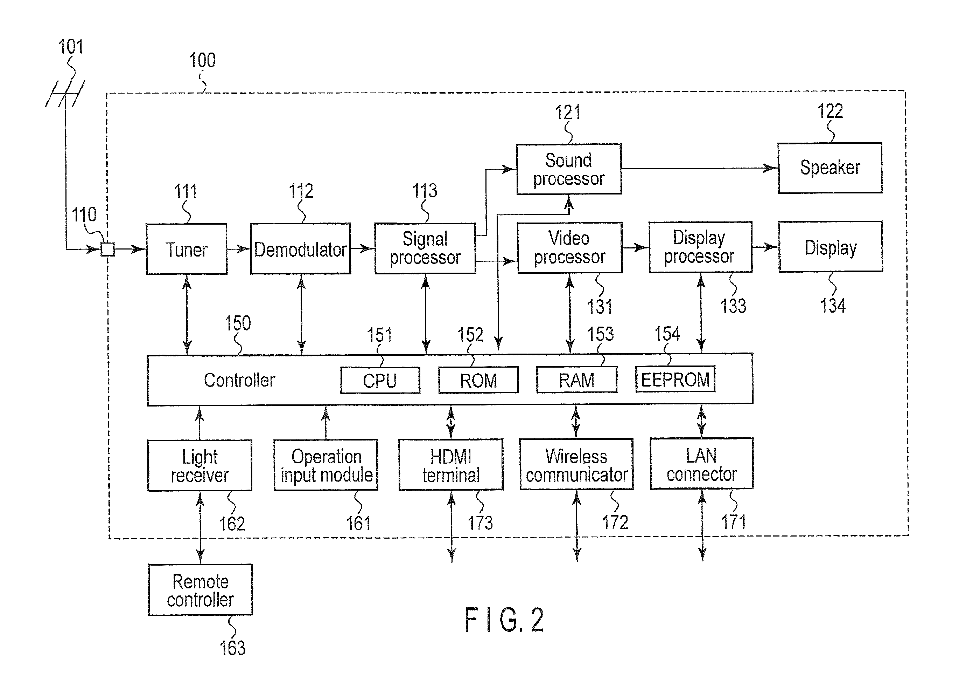

FIG. 2 shows an example of the broadcast reception apparatus 100 according to an embodiment.

The broadcast reception apparatus 100 comprises a broadcast signal input terminal 110, a tuner 111, a demodulator 112, a signal processor 113, a sound processor 121, a video processor 131, a display processor 133, a controller 150, an operation input module 161, a light receiver 162, an LAN connector 171, a wireless communicator 172, and an HDMI terminal 173. Further, the broadcast reception apparatus 100 also comprises a speaker 122 and a display 134.

The broadcast signal input terminal 110 can receive a digital broadcast signal received by, e.g., an antenna 101. The antenna 101 can receive, e.g., a terrestrial digital broadcast signal, a broadcasting satellite (BS) digital broadcast signal, and/or a 110-degree communication satellite (CS) digital broadcast signal. The broadcast signal input terminal 110 can receive data of contents such as a program supplied using the digital broadcast signal.

The broadcast signal input terminal 110 supplies the received digital broadcast signal to the tuner 111. The tuner 111 is a tuner for a digital broadcast signal. The tuner 111 transmits the tuned digital broadcast signal to the demodulator 112.

The demodulator 112 demodulates the digital broadcast signal. As a result, the demodulator 112 acquires content data such as a transport stream (TS) from the digital broadcast signal. The demodulator 112 inputs the acquired content data to the signal processor 113. That is, the antenna 101, the tuner 111, and the demodulator 112 function as a receiver configured to receive content data.

The signal processor 113 executes signal processing such as separation of the content data. That is, the signal processor 113 divides the content data into a digital video signal, a digital sound signal, and any other data signal. The signal processor 113 supplies a sound signal to the sound processor 121. Furthermore, the signal processor 113 supplies a video signal to the video processor 131. Moreover, the signal processor 113 supplies a data signal to the controller 150.

The sound processor 121 converts the digital sound signal received from the signal processor 113 into a signal (an audio signal) having a format that can be reproduced through the speaker 122. For example, the sound processor 121 converts the digital sound signal into an audio signal based on digital/analog conversion. The sound processor 121 supplies the audio signal to the speaker 122. The speaker 122 reproduces sound based on the supplied audio signal.

The video processor 131 converts the digital video signal received from the signal processor 113 into a video signal having a format that can be reproduced in the display 134. That is, the video processor 131 decodes (reproduces) the digital video signal received from the signal processor 113 into a video signal having a format that can be reproduced in the display 134. The video processor 131 outputs the video signal to the display processor 133.

The display processor 133 executes image quality adjustment processing concerning hue, brightness, sharpness, contrast, or others with respect to the received video signal under control of the controller 150, for example. The display processor 133 supplies the video signal subjected to the image quality adjustment to the display 134. The display 134 displays video pictures based on the supplied video signal.

The display 134 comprises, e.g., a liquid crystal display apparatus including a liquid crystal display panel including pixels aligned in a matrix form and a backlight that illuminates this liquid crystal panel. The display 134 displays video pictures based on the video signal supplied from the display processor 133.

The controller 150 functions as a controller configured to control operations of the respective units in the broadcast reception apparatus 100. The controller 150 comprises a CPU 152, an ROM 152, an RAM 153, an EEPROM 154, and others. The controller 150 executes various kinds of processing based on operation signals supplied from the operation input module 162.

The CPU 151 comprises an arithmetic operation element or the like that executes various kinds of arithmetic processing. The CPU 151 executes programs stored in, e.g., the ROM 152 or the EEPROM 154 and thereby realizes various functions.

The ROM 152 stores a program for controlling the broadcast reception apparatus 100, a program for realizing various functions, and others. The CPU 151 runs the programs stored in the ROM 152 based on operation signals supplied from the operation input module 161. As a result, the controller 150 controls operations of the respective units.

The RAM 153 functions as a work memory of the CPU 151. That is, the RAM 153 stores arithmetic results of the CPU 151, data read by the CPU 151, and others.

The EEPROM 154 is a nonvolatile memory that stores various kinds of setting information, programs, and others.

The operation input module 161 includes, e.g., operation keys or a touch pad that generates operation signals in response to input of operations performed by a user. Moreover, the operation input module 161 may be configured to receive operation signals from a keyboard, a mouse, or any other input apparatus that can generate the operation signals. The operation input module 161 supplies the operation signals to the controller 150.

It is to be noted that the touch pad includes a capacitance sensor, a thermosensor, or a device that generates positional information based on any other system. Additionally, when the broadcast reception apparatus 100 includes the display 134, the operation input module 161 may be configured to include a touch panel or the like that is integrally formed with the display 134.

The light receiver 162 comprises, e.g., a sensor that receives an operation signal from the remote controller 163. The light receiver 162 supplies the received signal to the controller 150. The controller 150 receives the signal supplied from the light receiver 162, amplifies the received signal, and subjects the signal to A/D conversion, whereby the signal is decoded into the original operation signal supplied from the remote controller 163.

The remote controller 163 generates an operation signal based on input of an operation performed by a user. The remote controller 163 supplies the generated operation signal to the light receiver 162 based on infrared communication. It is to be noted that the light receiver 162 and the remote controller 163 may be configured to transmit/receive the operation signal based on any other wireless communication, e.g., electric waves. The detailed configuration of the remote controller 163 will be described later.

The LAN connector 171 is an interface configured to enable communication with other apparatuses on a network, e.g., the Internet, an intranet, or a home network through the LAN. As described above, when the wireless communication terminal 300 is connected with the LAN connector 171 through the LAN cable, the broadcast reception apparatus 100 can communicate with other apparatuses connected with the wireless communication terminal 300. For example, the broadcast reception apparatus 100 can acquire and reproduce contents recorded in the apparatuses on the network through the LAN connector 171. Further, the broadcast reception apparatus 100 can output the content data connected through the LAN connector 171.

The wireless communicator 172 is an interface configured to communicate with the wireless communication terminal as an access point through the wireless LAN. The wireless communicator 172 can communicate with any other apparatus on a network, e.g., the Internet, an intranet, or a home network through the wireless communication terminal 300. For example, the wireless communicator 172 has a function of communicating with the wireless communication terminal 300 based on IEEE802.11b/g/n and the like.

As described above, when the wireless communication terminal 300 is connected to the wireless communicator 172 using the wireless LAN, the broadcast reception apparatus 100 can communicate with any other apparatus connected to the wireless communication terminal 300. Further, the wireless communicator 172 may be configured to perform communication directly with any other apparatus without interposing the wireless communication terminal 300 based on the wireless LAN.

The HDMI terminal 173 is an interface configured to perform communication based on a standard such as High Definition Multimedia Interface (HDMI) (registered trademark). To the TDMI terminal is connected a Bluray (registered trademark) recorder, a DVD recorder, a hard disk recorder, or an apparatus compatible with any other apparatus based on HDMI. The HDMI terminal 173 can receive content data output from a connected apparatus.

The controller 150 inputs content data received through the HDMI terminal 173 to the signal processor 113. The signal processor 113 separates a digital video signal, a digital sound signal, and others from the received content data. The signal processor 113 transmits the separated digital video signal to the video processor 131 and transmits the separated digital sound signal to the sound processor 121.

Further, the broadcast reception apparatus 100 may be configured to comprise a memory apparatus such as a hard disk drive (HDD) and store, e.g., a broadcast signal or contents supplied through a network in this memory apparatus.

Furthermore, the broadcast reception apparatus 100 can execute a program or an application stored in the EEPROM 154 and activate a browser that enables a user to view various kinds of information on the network. The broadcast reception apparatus 100 can realize various kinds of processing on the browser in accordance with respective operation signals. For example, the broadcast reception apparatus 100 can select an item on the browser or select a character input box in accordance with each operation signal.

Moreover, when a program or an application stored in the EEPROM 154 is executed, the broadcast reception apparatus 100 can activate a software keyboard that can generate a character string by allowing a user to select characters on a screen. The broadcast reception apparatus 100 allows the user to select, e.g., a button associated with a character on the software keyboard in accordance with an operation signal. The broadcast reception apparatus 100 can generate a character string in accordance with the selected button.

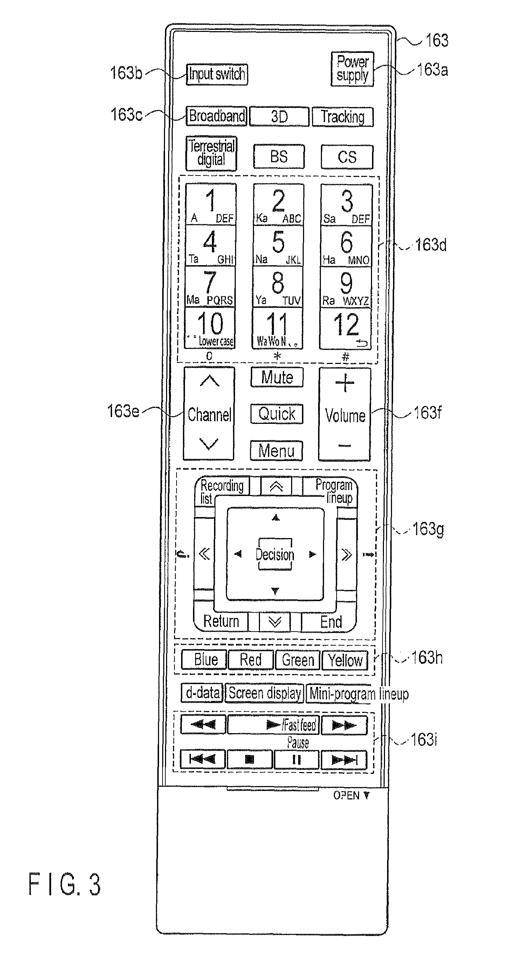

FIG. 3 shows a structural example of the remote controller 163.

The remote controller 163 has a power supply key 163a, an input switch key 163b, a function key 163c, numeric keys 163d, a channel key 163e, a volume key 163f, cursor keys 163g, color keys 163h, and control keys 163i. The remote controller 163 generates an operation signal in accordance with an operation of each key and outputs the generated operation signal. For example, the remote controller 163 outputs the operation signal using infrared rays.

The power supply key 163a is a key that allows the broadcast reception apparatus 100 to switch a power supply state.

The input switch key 163b is a key that allows the broadcast reception apparatus to switch the input terminals for a broadcast signal and contents. The broadcast reception apparatus 100 switches content data that is to be supplied to the signal processor 113 in accordance with an operation of the input switch key 163b.

The function key 163c is a key that allows the broadcast reception apparatus 100 to execute various kinds of functions. The function key 163c has, e.g., a broadband key, a 3D key, a tracking key, and others. The broadband key is a key that allows the broadcast reception apparatus 100 to bring up a browser for browsing the Internet.

The 3D key is a key that allows the broadcast reception apparatus 100 to switch 2D display and 3D display. The tracking key is a key that allows the broadcast reception apparatus 100 to display a screen which is used by a user to confirm a position where viewing the 3D display is possible.

The numeric keys 163d are keys that allow the broadcast reception apparatus 100 to select a channel. The broadcast reception apparatus 100 selects a channel (channel selection) of a broadcast signal based on an operation signal associated with the numeric keys 163d. Additionally, the numeric keys 163d also function as keys used for inputting a character string and others.

For example, when the browser is active and a character input box in the screen of the browser is selected, the broadcast reception apparatus 100 generates a character string based on an operation signal associated with the numeric keys 163d and inputs the generated character string in the character input box. Furthermore, the remote controller 163 also includes selection keys for selecting digital terrestrial, BS, and CS broadcast signals.

The channel key 163e is a key that allows the broadcast reception apparatus 100 to select a channel.

The volume key 163f is a key that allows the broadcast reception apparatus 100 to adjust sound volume.

The cursor keys 163g are keys that allow the broadcast reception apparatus 100 to execute various kinds of processing. The cursor keys 163g include a cross key, a decision key, a program lineup key, a recording list key, a return key, an end key, and others. The broadcast reception apparatus 100 performs, e.g., selection of various items on the screen based on operation signals associated with the cross key and the decision key.

Moreover, the broadcast reception apparatus 100 performs, e.g., switching of a recording list screen, a program lineup screen, and any other display screen based on an operation signal associated with the return key. Additionally, the broadcast reception apparatus 100 terminates display of the recording list screen, the program lineup screen, and any other display screen based on an operation signal associated with the end key.

Further, the broadcast reception apparatus 100 generates the program lineup screen based on a broadcast signal associated with the broadcast lineup key and displays the program lineup screen in the display 134. Furthermore, the broadcast reception apparatus 100 generates a screen (a recording list screen) showing a list of recorded contents (a recording list) that can be reproduced by the broadcast reception apparatus 100 based on an operation signal associated with the recording list key and displays the recording list screen in the display 134.

When the browser is activated in accordance with an operation of a broadband key, the broadcast reception apparatus 100 selects an item on the browser in accordance with an operation using the cursor keys 163g. Further, when the character input box on the browser is selected by an operation using the cursor keys 163g, the broadcast reception apparatus 100 activates the software keyboard. The broadcast reception apparatus 100 generates a character string and inputs the generated character string into the character input box by an operation using the numeric keys 163d during the activation of the software keyboard.

The color keys 163h are keys that allow the broadcast reception apparatus 100 to perform various operations. The control keys 163i include a reproduction key, a stop key, a fast-forward key, a rewind key, a pause key, a next key, a previous key, and others.

The broadcast reception apparatus 100 starts reproduction/stop/fast-forward/rewind/pause and others with respect to contents based on an operation signal associated with each key.

Further, the remote controller 163 comprises a mute key, a quick key, a menu key, a d-data key, a screen display key, a mini program lineup key, and others.

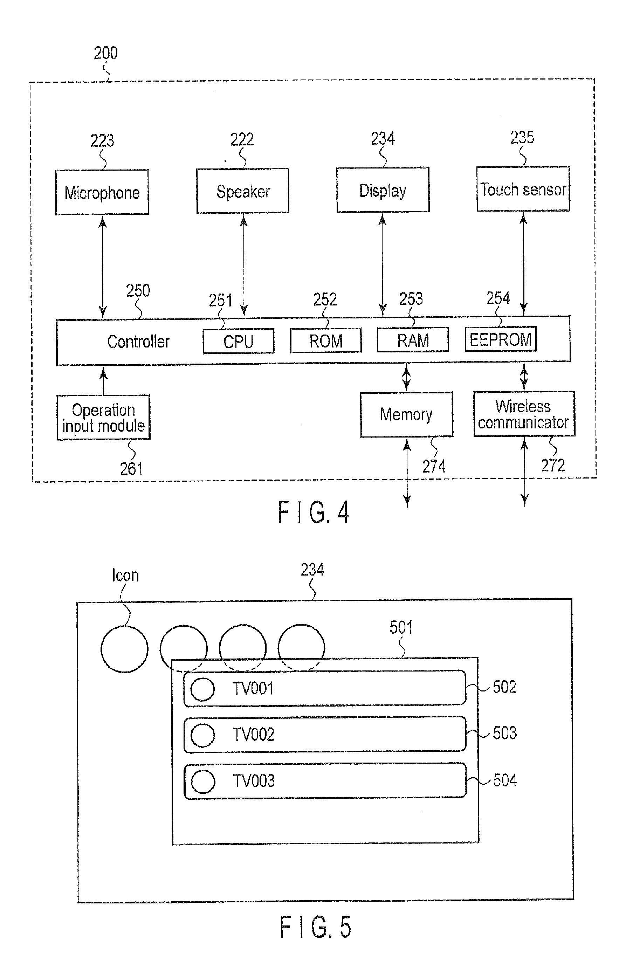

FIG. 4 shows an example of the mobile terminal 200 according to an embodiment.

The mobile terminal 200 comprises a controller 250, an operation input module 261, a wireless communicator 272, and a memory 274. Furthermore, the mobile terminal 200 comprises a speaker 222, a microphone 223, a display 234, and a touch sensor 235.

The controller 250 functions as a controller configured to control operations of the respective units in the mobile terminal 200. The controller 250 comprises a CPU 251, an ROM 252, an RAM 253, an EEPROM 254, and others. The controller 250 executes various kinds of processing based on an operation signal supplied from the operation input module 261 or the touch sensor 235.

The CPU 251 comprises an arithmetic operation element or the like that executes various kinds of arithmetic processing. The CPU 251 executes programs stored in the ROM 252, the EEPROM 254, or the like and realizes various functions.

The ROM 252 stores a program for controlling the mobile terminal 200, a program for realizing various kinds of functions, and others. The CPU 251 activates a program stored in the ROM 252 based on an operation signal supplied from the operation input module 261. As a result, the controller 250 controls operations of the respective units.

The RAM 253 functions as a work memory of the CPU 251. That is, the RAM 253 stores results of arithmetic operations performed by the CPU 251, data read by the CPU 251, and others.

The EEPROM 254 is a nonvolatile memory that stores various kinds of setting information, programs, and others.

Additionally, the CPU 251 can execute various kinds of processing based on data such as an application stored in the memory 274.

Further, the controller 250 can generate video signals for various screens in accordance with an application executed by the CPU 251 and display these signals in the display 234. Furthermore, the controller 250 can generate sound signals of various kinds of sounds in accordance with an application executed by the CPU 251 and output these signals through the speaker 222.

The speaker 222 reproduces sound based on a supplied audio signal.

The microphone 223 is a sound collector configured to generate a signal (a recording signal) based on sound outside the mobile terminal 200. The microphone 223 supplies the recording signal to the controller 250.

The display 234 comprises, e.g., a liquid crystal display apparatus provided with a liquid crystal display panel including pixels aligned in a matrix form and a backlight that illuminates this liquid crystal panel.

The touch sensor 235 is a capacitance sensor, a thermosensor, or an apparatus that generates positional information based on any other system. For example, the touch sensor 235 is provided integrally with the display 234. As a result, the touch sensor 235 can generate an operation signal based on an operation on the screen displayed in the display 234 and supply the generated signal to the controller 250.

The operation input module 261 comprises keys configured to generate an operation signal in response to input of an operation performed by a user. The operation input module 261 comprises, e.g., a volume adjustment key for adjusting volume, a luminance adjustment key for adjusting display luminance of the display 2347, a power supply key for switching a power supply state of the mobile terminal 200, and others. Furthermore, the operation input module 261 may further include a track ball that enables the mobile terminal 200 to execute various selecting operations and others. The operation input module 261 generates an operation signal in accordance with an operation of each of the above-described keys and supplies the operation signal to the controller 250.

Moreover, the operation input module 261 may be configured to receive an operation signal from a keyboard, a mouse, or any other input apparatus that can generate the operation signal. When the mobile terminal 200 includes a USB terminal, a Bluetooth (registered trademark) module, or the like, the operation input module 261 receives an operation signal from an input apparatus connected through the USB or Bluetooth and supplies the received signal to the controller 250.

The wireless communicator 272 is an interface configured to perform communication with the wireless communication terminal 300 as an access point through the wireless LAN. The wireless communicator 272 can communicate with any other apparatus on a network, e.g., the Internet, an intranet, or a home network through the wireless communication terminal 300. For example, the wireless communicator 272 has a function of performing communication with the wireless communication terminal 300 based on, e.g., IEEE802.11b/g/n.

As described above, when the wireless communication terminal 300 and the wireless communicator 272 are connected to each other through the wireless LAN, the mobile terminal 200 can communicate with other apparatuses connected to the wireless communication terminal 300. Additionally, the wireless communicator 272 may be configured to directly communicate with other apparatuses based on the wireless LAN without interposing the wireless communication terminal 300.

Further, the mobile terminal 200 includes a non-illustrated power supply unit. The power supply unit comprises a terminal (e.g., a DC jack) configured to achieve connection with an adapter that receives electric power from a commercial power source or the like. The power supply unit changes a battery with the electric power received from the commercial power source. Furthermore, the power supply unit supplies the electric power charging the battery to the respective units in the mobile terminal 200.

The memory 274 comprises a hard disk drive (HDD), a solid state drive (SSD), a semiconductor memory, or the like. The memory 274 can store programs or applications executed by the CPU 251 of the controller 250 and various kinds of data.

The memory 274 stores, e.g., an operating system (OS) and various kinds of applications that can be executed on the OS. The memory 274 has, e.g., a remote control application. The remote control application is a program that allows the mobile terminal 200 to function as a controller of other apparatuses. The memory 274 has, e.g., a browsing application (a browser application), a remote control application, a character input application (a keyboard application), a mouse pointer application (a pointer application), and a sound input application, and others.

The browser application is a browser that is used for browsing the Internet. The remote control application is a program that allows the mobile terminal 200 to function as a controller of other apparatuses. The keyboard application is a program that facilitates input of characters using the touch sensor 235. The pointer application is a program that facilitates a pointing operation using the touch sensor 235. The sound input application is a program that is used for generating a character string based on a recording signal acquired through the microphone 223.

FIG. 5 to FIG. 12 show an example of such an application as described above.

FIG. 5 shows an example of a home screen of the OS displayed in the display 234 of the mobile terminal 200. The home screen displays icons and the like used for activating various kinds of applications. The controller 250 of the mobile terminal 200 activates the remote control application when the remote control application is selected from the home screen or a list of applications.

When the remote control application is activated, the controller 250 displays in the display 234 a window 501 for selecting an apparatus to be controlled using the remote control application. The controller 250 displays in the window 501 a list of apparatuses (controlled apparatuses) previously registered as apparatuses to be controlled using the remote control application.

For example, when "TV001", "TV002", and "TV003" are registered, the controller 250 displays a button 502 for selecting "TV001", a button 503 for selecting "TV002", and a button 504 for selecting "TV003" in the window 501.

When any one of these buttons is selected, the controller 250 displays a screen (a remote control menu) for controlling the selected apparatus in the display 234.

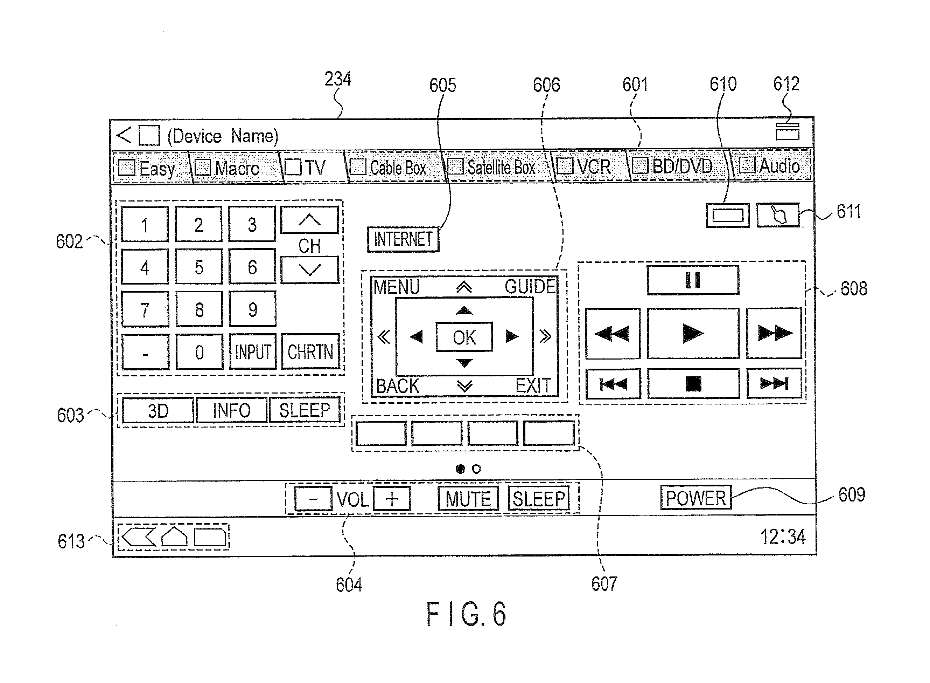

FIG. 6 shows an example of a remote control menu. Here, an example of the remote control menu that is used for controlling the broadcast reception apparatus 100 is shown. The controller 250 displays the remote control menu as a first operation menu in the display 234. The controller 250 transmits a signal to the broadcast reception apparatus 100 as a controlled apparatus in accordance with an operation in the remote control menu.

The controller 250 displays in the remote control menu apparatus selection tabs 601, channel selection buttons 602, function buttons 603, volume buttons 604, an Internet button 605, cursor buttons 606, color buttons 607, control buttons 608, a power supply button 609, a keyboard button 610, a pointer button 611, a setting button 612, and a menu button 613.

The mobile terminal 200 generates an operation signal in accordance with an operation of each button and outputs the generated operation signal. For example, the mobile terminal 200 transmits an operation signal to the broadcast reception apparatus 100 through the wireless communicator 272 based on the wireless LAN and the like.

The apparatus selection tabs 601 are tabs that enable selecting an apparatus to be controlled using the remote control application.

The channel selection buttons 602 are keys for allowing the broadcast reception apparatus 100 to select a channel. The channel selection buttons 602 have numeric buttons and upper and lower buttons. The broadcast reception apparatus 100 selects a channel (channel selection) for a broadcast signal based on an operation signal associated with the channel selection buttons.

The function buttons 603 are keys that allow the broadcast reception apparatus to execute various functions. The function buttons 603 have, e.g., a 3D button, an info button, a sleep button, and others.

The 3D button is a key that allows the broadcast reception apparatus 100 to switch 2D display and 3D display. The info button is a button that allows the broadcast reception apparatus 100 to display various kinds of information. For example, the broadcast reception apparatus 100 displays in the display 134 information concerning contents, screens based on various kinds of data included in broadcast signals, and others based on an operation signal associated with the info button. The sleep button is a button that configures settings concerning control over the power supply of the broadcast reception apparatus 100.

The volume buttons 604 are buttons that allow the broadcast reception apparatus 100 to adjust volume. The volume buttons 604 have a plus button and a minus button. The broadcast reception apparatus 100 adjusts volume of the speaker 122 based on an operation signal associated with a plus button and a minus button.

Furthermore, the volume buttons 604 also have a mute button. The broadcast reception apparatus 100 switches to a mute state that sound is not output from the speaker 122 based on an operation signal associated with the mute button.

The Internet button 605 is a button that allows the broadcast reception apparatus 100 to activate a browser for viewing the Internet. The broadcast reception apparatus 100 activates the browser based on an operation signal associated with the Internet button 605.

The cursor buttons 606 are buttons that allow the broadcast reception apparatus 100 to execute various kinds of processing. The cursor buttons 606 include a cross button, a decision button (an OK button), a program lineup button (a guide button), a menu button, a back button, an end button (an exit button), and others. The broadcast reception apparatus 100 performs, e.g., selection of various items in the screen based on operation signals associated with the cross button and the decision button.

Moreover, the broadcast reception apparatus 100 performs, e.g., switching of a recording list screen, a program lineup screen, and any other display screen based on an operation signal associated with the back button. Additionally, the broadcast reception apparatus 100 terminates display of the recording list screen, the program lineup screen, and any other display screen based on an operation signal associated with the end button.

Further, the broadcast reception apparatus 100 generates a program lineup screen based on a broadcast signal in accordance with an operation signal associated with the program lineup button and displays the program lineup screen in the display 134. Furthermore, the broadcast reception apparatus 100 displays a menu for changing various kinds of settings of the broadcast reception apparatus 100 in the display 134 based on an operation signal associated with the menu button.

The color buttons 607 are buttons that allow the broadcast reception apparatus 100 to perform various kinds of operations.

The control buttons 608 includes a reproduction button, a stop button, a fast-forward button, a rewind button, a pause button, a next button, a previous button, and others.

The broadcast reception apparatus 100 starts, e.g., reproduction/stop/fast-forward/rewind of contents based on an operation signal associated with each button.

The power supply button 609 is a button for switching a power supply state of the broadcast reception apparatus 100.

The keyboard button 610 is a button for activating an application (the keyboard application) which is used to input characters in the mobile terminal 200. The pointer button 611 is a button for activating the keyboard application as a button that allows the mobile terminal 200 to activate an application for a pointer operation (the pointer application). The pointer button 611 is a button that allows the mobile terminal 200 to activate the pointer application. It is to be noted that the keyboard application and the pointer application will be described later.

The setting button 612 is a button for displaying a setting menu that is used to change various kinds of settings of the remote control application. The mobile terminal 200 displays the setting menu in the display 234 in accordance with an operation with respect to the setting button 612.

The menu buttons 613 are buttons that enable the mobile terminal 200 to execute various operations on the OS. The mobile terminal 200 switches a screen of the running application to a previous screen in accordance with an operation of the return button. Further, the mobile terminal 200 displays a home screen of the OS in the display 234 in accordance with an operation of the home button.

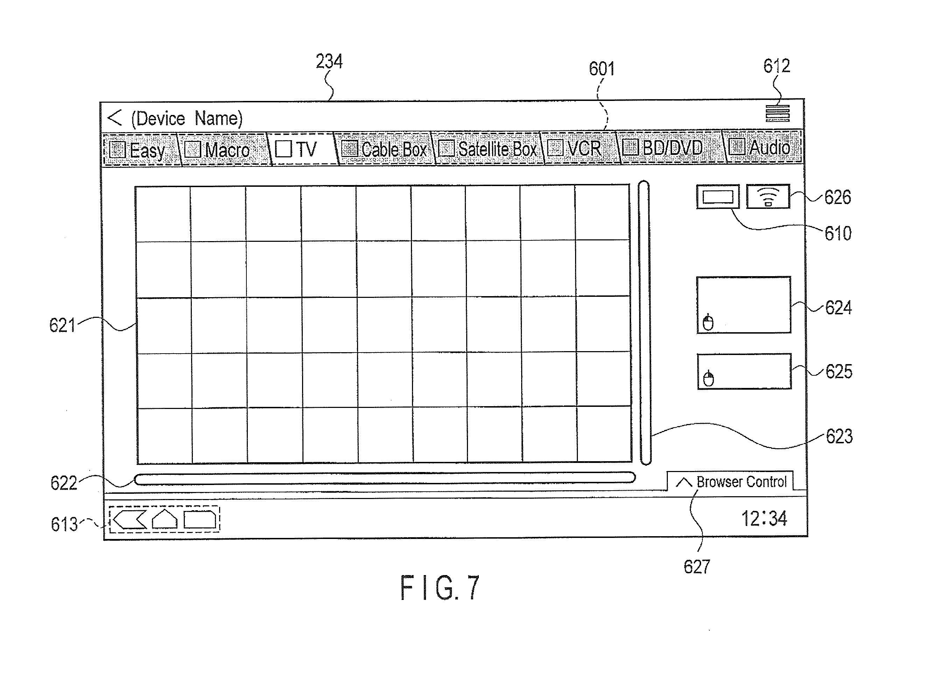

FIG. 7 shows an example of the pointer application. When the pointer button 611 is selected in the remote control menu shown in FIG. 6, the controller 250 activates the pointer application and displays a pointer screen depicted in FIG. 7. That is, the controller 250 displays the pointer screen for the pointer operation as a second operation menu in the display 234. The controller 250 transmits a signal to the broadcast reception apparatus 100 as the controlled apparatus in accordance with an operation in the pointer screen.

It is to be noted that a description about the buttons overlapping those in the remote control menu will be omitted.

The controller 250 displays the apparatus selection tabs 601, an input frame 621, a horizontal scroll bar 622, a vertical scroll bar 623, a main button 624, a sub-button 625, the keyboard button 610, a remote control button 626, a browser controller tab 627, the setting button 612, and the menu button 613 in the pointer screen.

The input frame 621 is a frame used for detecting positional information in accordance with an operation. The controller 250 uses the touch sensor 235 to detect an operation with respect to the input frame 621 performed by a user. The controller 250 generates an operation signal (e.g., positional information) based on the operation with respect to the input frame 621 and sequentially transmits the operation signal to the broadband reception apparatus 100. The controller 250 can detect a trajectory (gesture) of operations by continuously detecting the operations with respect to the input frame 621.

For example, when the browser is activated by the broadcast reception apparatus 100, the broadcast reception apparatus 100 displays a pointer on the display. The broadcast reception apparatus 100 operates the pointer in accordance with an operation signal based on an operation for the input frame 621 received from the mobile terminal 200. That is, the mobile terminal 200 can control an operation of the pointer of the broadcast reception apparatus 100 in accordance with an operation for the input frame 621.

The horizontal scroll bar 622 and the vertical scroll bar 623 are objects configured to generate and operation signal for horizontally scrolling an vertically scrolling the browser of the broadcast reception apparatus 100.

The main button 624 is an object configured to generate an operation signal for executing a predetermined operation on the browser of the broadcast reception apparatus 100. The main button 624 corresponds to, e.g., a main button of the mouse. When the broadcast reception apparatus 100 has received an operation signal associated with an operation of the main button 624, it executes a preset operation. For example, when the broadcast reception apparatus 100 has received an operation signal associated with an operation of the main button 624, it executes an operation such as selection of an item.

The sub-button 625 is an object configured to generate an operation signal for executing a predetermined operation on the browser of the broadcast reception apparatus 100. The sub-button 625 corresponds to, e.g., a sub-button of the mouse. When the broadcast reception apparatus 100 has received an operation signal associated with an operation of the sub-button 625, it executes a preset operation. For example, when the broadcast reception apparatus 100 has received an operation signal associated with an operation of the sub-button 625, it executes an operation such as display of a menu window.

The remote control button 626 is a button configured to display the remote control menu in the mobile terminal 200.

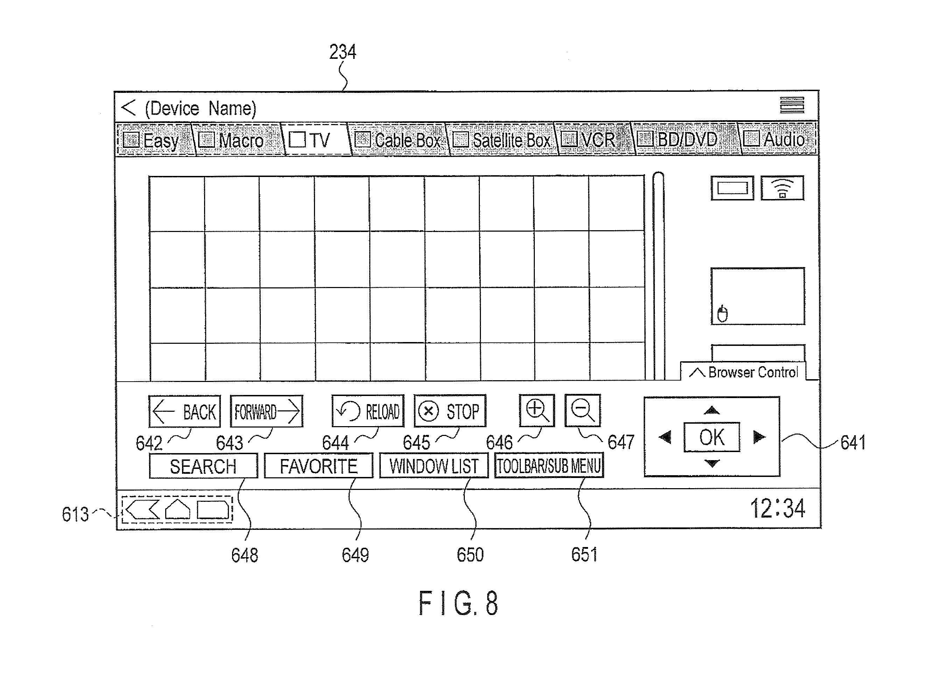

The browser controller tab 627 is a tab used for displaying a predetermined menu. When the browser controller tab 627 is selected on the pointer screen, the controller 250 displays a menu (e.g., a browser controller) on the pointer screen as shown in FIG. 8.

For example, the controller 250 displays a cursor button 641, a back button 642, a forward button 643, a reload button 644, a stop button 645, a zoom-in button 646, a zoom-out button 647, a search button 648, a favorite button 649, a window list button 650, and a tool bar/sub-menu button 651 in a window of the browser controller.

The cursor button 641 is a button that is used for, e.g., operation of selecting an item on the browser of the broadcast reception apparatus 100.

The back button 642 is a button that is used for executing a "back" operation on the browser of the broadcast reception apparatus 100. The controller 250 can return a screen of the browser of the broadcast reception apparatus 100 to a previous screen in accordance with an operation of the back button 642.

The forward button 643 is a button configured to execute a 'forward" operation on the browser of the broadcast reception apparatus 100. The controller 250 can advance a screen of the browser of the broadcast reception apparatus 100 to a preceding screen in accordance with an operation of the forward button 643.

The reload button 644 is a button configured to execute a "reload" operation on the browser of the broadcast reception apparatus 100. The controller 250 can update a screen of the browser of the broadcast reception apparatus 100 to the latest information in accordance with an operation of the reload button 644.

The stop button 645 is a button configured to execute a "stop" operation on the browser of the broadcast reception apparatus 100. The controller 250 can stop a read operation of the browser of the broadcast reception apparatus 100 in accordance with an operation of the stop button 645.

The zoom-in button 646 is a button configured to execute "zoom-in" operation on the browser of the broadcast reception apparatus 100. The controller 250 can increase a display size of characters or the like in the browser of the broadcast reception apparatus 100 in accordance with an operation of the zoom-in button 646.

The zoom-out button 647 is a button configured to execute a "zoom-out" operation on the browser of the broadcast reception apparatus 100. The controller 250 can reduce a display size of characters or the like in the browser of the broadcast reception apparatus 100 in accordance with an operation of the zoom-out button 647.

The search button 648 is a button configured to execute a "search" operation on the browser of the broadcast reception apparatus 100. The controller 250 can execute an operation, e.g., display of a search screen on the browser of the broadcast reception apparatus 100 in accordance with an operation of the search button 648.

The favorite button 649 is a button configured to execute a "favorite list display" operation on the browser of the broadcast reception apparatus 100. The controller 250 can display a preset favorite list on the browser of the broadcast reception apparatus 100 in accordance with an operation of the favorite button 649.

The window list button 650 is a button configured to execute a "window list display" operation on the browser of the broadcast reception apparatus 100. The controller 250 can display windows opened on the browser of the broadcast reception apparatus 100 as a list in accordance with an operation of the window list button 650.

The tool bar/sub-menu button 651 is a button configured to execute, e.g., a "tool bar" or "sub-menu" operation on the browser of the broadcast reception apparatus 100. The controller 250 can open "tool bar" or "sub-menu" on the browser of the broadcast reception apparatus 100 in accordance with an operation of the tool bar/sub-menu button 651.

It is to be noted that the broadcast reception apparatus 100 as the controlled apparatus may be configured to transmit a command list to the mobile terminal 200. In this case, the mobile terminal 200 can set buttons to be displayed in the browser controller in accordance with the received command list.

As described above, the mobile terminal 200 can generate an operation signal in accordance with an operation input on the pointer screen, transmit the generated operation signal to the broadcast reception apparatus 100, and thereby control various operations of the broadcast reception apparatus 100. For example, the mobile terminal 200 can control an operation of the browser of the broadcast reception apparatus 100 in accordance with an operation on the pointer screen.

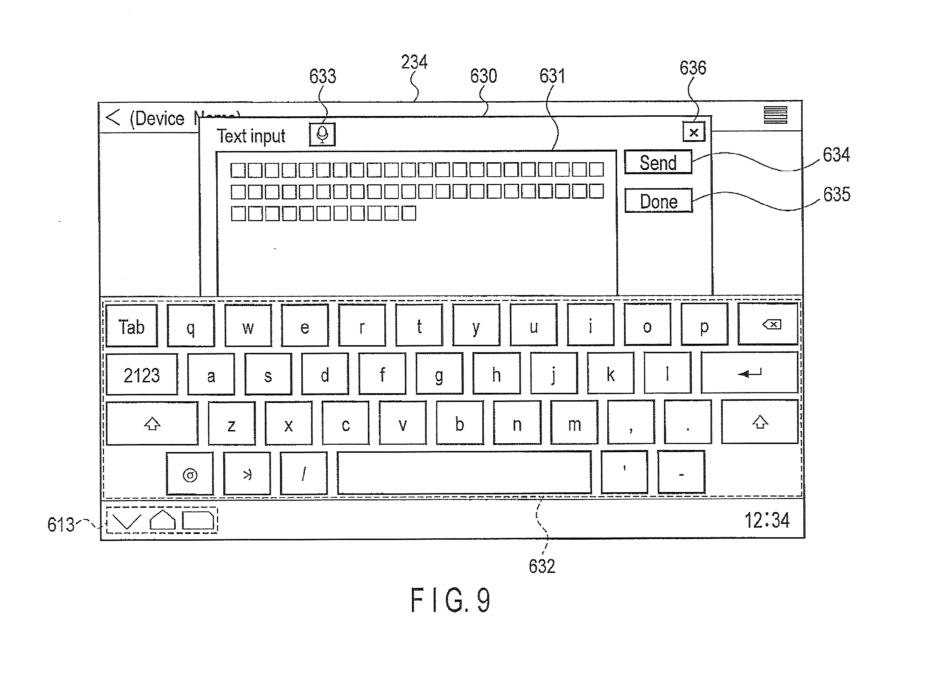

FIG. 9 shows an example of the keyboard application. When the keyboard button 610 is selected in the remote control menu shown in FIG. 6 or the pointer screen depicted in FIG. 7, the controller 250 activates the keyboard application and displays the keyboard screen shown in FIG. 9. It is to be noted that a description of buttons overlapping those in the remote control menu will be omitted.

The controller 250 displays a display box 631, a character buttons 632, a sound input button 633, a send button 634, a done button 635, and a close button 636 in the keyboard screen.

The display box 631 is a box where the character buttons 632 or character strings input based on sound input are displayed.

The character buttons 632 are a button group in which buttons associated with the respective keys in the keyboard are arranged. The controller 250 generates character strings in accordance with an operation with respect to the character buttons 632. For example, the character buttons 632 have respective character buttons placed in the arrangement of Qwerty keyboard. Furthermore, the character buttons 632 may have a button group associated with the kana input. Moreover, the character buttons 632 may have a button group associated with numeric figures and symbols

The sound input button 633 is a button configured to activate the sound input application. The controller 250 activates the sound input application in accordance with an operation of the sound input button 633. When the sound input application is executed, the controller 250 generates character strings based on a recording signal acquired through the microphone 223.

The send button 634 is a button configured to send a character string displayed in the display box 631 to the broadcast reception apparatus 100. The controller 250 transmits the character string displayed in the display box 631 to the broadcast reception apparatus 100 in accordance with an operation of the send button 634. It is to be noted that, when the character input box is not selected in the broadcast reception apparatus 100, the controller 250 displays in the display 234 information indicating that a user of the mobile terminal 200 is to be informed of a state that the character string cannot be transmitted.

The done button 635 and the close button 636 are buttons configured to terminate the keyboard application. The controller 250 terminates the keyboard application in accordance with an operation of the done button 635 or the close button 636. In this case, the controller 250 returns display in the display 234 to the pointer screen or the remote control menu.

The close button 636 is a button configured to terminate the keyboard application. The controller 250 terminates the keyboard application in accordance with an operation of the done button 635. In this case, the controller 250 returns display in the display 234 to the pointer screen or the remote control menu.

Further, the controller 250 automatically activates the pointer application or the keyboard application in accordance with a state of an operation of the broadcast reception apparatus 100.

As described above, the mobile terminal 200 periodically performs polling with respect to the broadcast reception apparatus 100 based on wireless communication and thereby sequentially recognizes a state of the broadcast reception apparatus 100. For example, the mobile terminal 200 recognizes whether the browser is active in the broadcast reception apparatus 100. Furthermore, the mobile terminal 200 recognizes whether the software keyboard is active in the broadcast reception apparatus 100. The mobile terminal 200 switches a screen for controlling the controlled apparatus in accordance with the recognized state of the controlled apparatus. For example, the controller 250 of the mobile terminal 200 switches the remote control menu and the pointer screen in accordance with a recognition result.

The controller 250 judges whether the broadcast reception apparatus 100 requires a pointer operation in accordance with the recognition result. When it is determined that the pointer operation is required, the controller 250 switches the remote control menu to the pointer screen.

For example, when the controller 250 of the mobile terminal 200 recognizes that the remote control application is active and the browser is active in the broadcast reception apparatus 100, the controller 250 activates the pointer application depicted in FIG. 7. That is, the mobile terminal 200 can activate the pointer application in accordance with the activation of the browser in the broadcast reception apparatus 100.

As a result, the mobile terminal 200 can automatically activate the pointer application without waiting for the operation for activating the pointer application. Therefore, the mobile terminal 200 can further easily control the browser of the controlled apparatus. As a result, it is possible to provide the electronic apparatus and the controlling method for an electronic apparatus having enhanced convenience.

In addition, the Keyboard application and the pointer application may be built into remote control application as a function of a part of the remote control application. That is, the controller 250 of the mobile terminal 200 switches display of the display 234 to the keyboard screen, when keyboard button 610 is selected during activating of the remote control application. the controller 250 switches display of the display 234 to the pointer screen, when pointer button 611 is selected during activating of the remote control application.

Moreover, the controller 250 judges whether the broadcast reception apparatus 100 has selected the character input box in accordance with the recognition result. When it is determined that the broadcast reception apparatus 100 has selected the character input box, the controller 250 switches display to the keyboard screen.

For example, when the controller 250 of the mobile terminal 200 recognizes that the remote control application is active and the software keyboard is active in the broadcast reception apparatus 100, it activates the keyboard application depicted in FIG. 9. That is, the mobile terminal 200 can activate the keyboard application in accordance with application of the software keyboard in the broadcast reception apparatus 100. As a result, the mobile terminal 200 can automatically activate the keyboard application without waiting for an operation for activating the keyboard application. Therefore, the mobile terminal 200 can further easily control the character input processing of the controlled apparatus. As a result, it is possible to provide the electronic apparatus and the controlling method for an electronic apparatus having enhanced convenience.

Additionally, the controller 250 may be configured to input a character string already input in an input box of the browser of the broadcast reception apparatus 100 into the display box 631 depicted in FIG. 9 when activating the keyboard application. As a result, redundant input operations can be avoided. Further, character strings input in the display box 631 may be sequentially input into the input box of the browser of the broadcast reception apparatus 100.

It is to be noted that there are several patterns of an action when the controller 250 of the mobile terminal 200 activates the pointer application and the keyboard application.

First, when the mobile terminal 200 and the broadcast reception apparatus 100 as the controlled apparatus perform the polling at predetermined intervals and the browser is activated in the broadcast reception apparatus 100, the mobile terminal 200 activates the pointer application.

Furthermore, the broadcast reception apparatus 100 may be configured to transmit to the mobile terminal 200 a message indicating that the browser has been activated when activating the browser. In this case, when the mobile terminal 200 receives the message from the broadcast reception apparatus 100, it activates the pointer application. As a result, a time lag between the broadcast reception apparatus 100 and the mobile terminal 200 can be reduced. Moreover, since the polling is no longer required, power consumption in the mobile terminal 200 can be suppressed.

Further, as described above, when the Internet button 605 in the remote control menu is operated, the mobile terminal 200 transmits an operation signal to the broadcast reception apparatus 100 to activate the browser for browsing the Internet. At this time, the mobile terminal 200 may be configured to activate the pointer application. That is, the mobile terminal 200 transmits the operation signal to the broadcast reception apparatus 100 to activate the browser for browsing the Internet, and it activates the pointer application. As a result, a time lag between the broadcast reception apparatus 100 and the mobile terminal 200 can be reduced. Furthermore, since the polling is no longer required, power consumption in the mobile terminal 200 can be suppressed.

Additionally, the controller 250 of the mobile terminal 200 may control the prevent the pointer application from being automatically activated at or after the second time. For example, when the controller 250 recognizes that the browser has been activated in the broadcast reception apparatus 100 by the polling while the remote control application has been active, the first activation of the pointer application is performed. Here, when an operation of terminating the pointer application is input, the controller 250 terminates the pointer application. Further, the controller 250 continuously executes the polling. Even though the controller 250 recognizes that the browser is active in the broadcast reception apparatus 100 based on this polling, it controls each unit to prevent the pointer application from being executed.

For example, when the controller 250 continuously recognizes a state of the broadcast reception apparatus 100 and also recognizes that the state of the broadcast reception apparatus 100 has changed to a state during execution of the browser from any other state, it activates the pointer application. As a result, the controller 250 can prevent the pointer application from being automatically activated after the pointer application is terminated by an operation of a user.

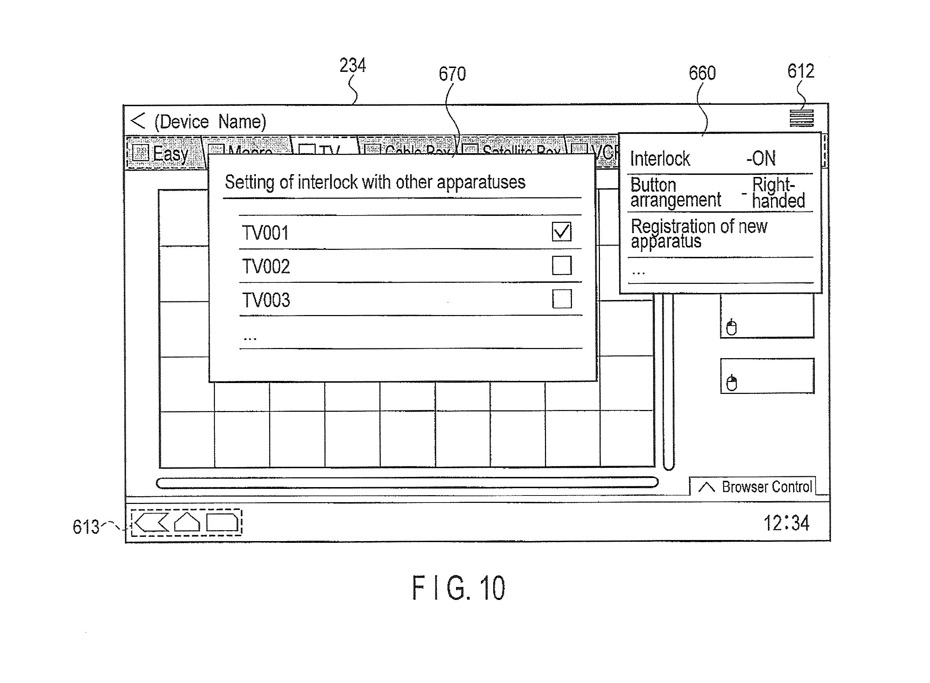

Furthermore, ON/OFF of interlock of the mobile terminal 200 and the broadcast reception apparatus 100 can be switched by settings. When the setting button 612 is operated in the remote control menu or the pointer screen, the controller 250 displays such a setting menu window 660 as depicted in FIG. 10 in the display 234.

The controller 250 displays various setting items in the setting menu windows 660. In the example of FIG. 10, the controller 250 displays "ON/OFF of interlock", "button arrangement", and "registration of new apparatus" as the setting items in the setting menu window 660.

When ON/OFF of interlock is selected, the controller 250 displays in the display 234 a window 670 having a list of registered apparatuses (the controlled apparatuses) and indication of ON/FF for each apparatus. According to the example shown in FIG. 10, "TV001" is set to interlock with the mobile terminal 200, and "TV002" and "TV003" are set to not interlock with the mobile terminal 200. The controller 250 switches ON/OFF of interlock of each apparatus in accordance with an operation in the window 670. As a result, the mobile terminal 200 can perform control further meeting a user's intention.

When the interlock of an apparatus as a control target of the remote control application is ON, the controller 250 performs the above-described polling and sequentially recognizes a state of the controlled apparatus. As a result, the controller 250 can activate the pointer application and the keyboard application in accordance with a state of the controlled apparatus. Additionally, when the interlock of the apparatus as the control target of the remote control application is OFF, the controller 250 does not perform the polling. Therefore, the controller 250 does not automatically activate the pointer application and the keyboard application.

Further, the mobile terminal 200 may be configured to set whether each application interlocks with the controlled apparatus. For example, the controller 250 sets whether each of the pointer application and the keyboard application interlocks with the controlled apparatus. As a result, the controller 250 can enable automatic activation of the pointer application and disable automatic activation of the keyboard application. Furthermore, the controller 250 can disable automatic activation of the pointer application and enable automatic activation of the keyboard application.

Moreover, a position of each object in the pointer screen can be adjusted based on the settings. The controller 250 may be configured to switch the pointer screen between right-handed arrangement and left-handed arrangement. Additionally, the controller 250 may be configured to individually customize a position of each object in the pointer screen.

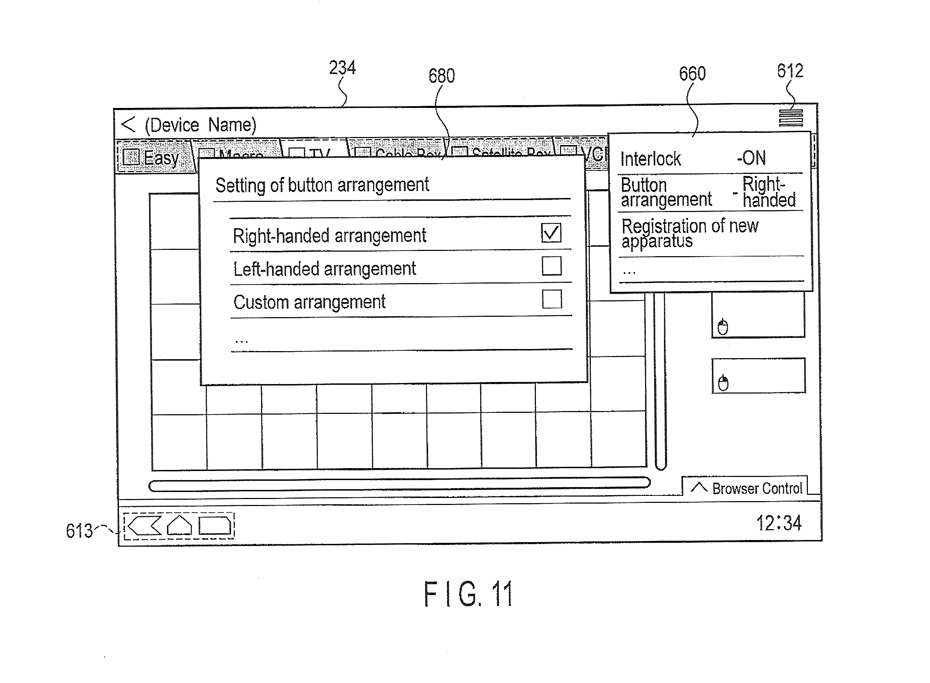

When button arrangement is selected in the setting menu window 600 depicted in FIG. 10, the controller 250 displays a window 680 for selecting the button arrangement in the display 234 as depicted in FIG. 11. The window 680 has selection items. For example, the window 680 has selection items "right-handed arrangement", "left-handed arrangement", and "custom arrangement".

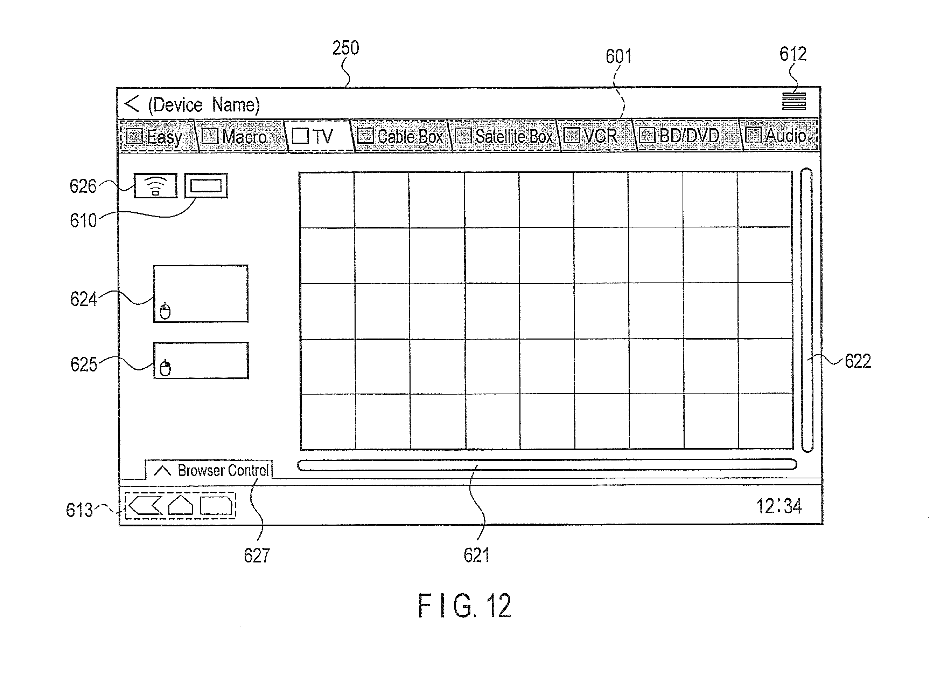

When the right-handed arrangement is selected, the controller 250 displays in the display 234 the pointer screen having the arrangement shown in FIG. 7. Further, when the left-handed arrangement is selected, the controller 250 displays in the display 234 the pointer screen having arrangement shown in FIG. 12.

Like the pointer screen having the right-handed arrangement, the pointer screen having the left-handed arrangement has the apparatus selection tabs 601, the input frame 621, the horizontal scroll bar 622, the vertical scroll bar 623, the main button 624, the sub-button 625, the keyboard button 610, the remote control button 626, the browser controller tab 627, the setting button 612, and the menu button 613.

It is to be noted that, as different from the pointer screen having the right-handed arrangement, in the pointer screen having the left-handed arrangement, the main button 624, the sub-button 625, the keyboard button 610, the remote control button 626, and the browser controller tab 627 are arranged on the left side of the input frame 621.

Additionally, when the custom arrangement is selected, the controller 250 displays in the display 234 the pointer screen in which positions of each button and each object of the pointer screen are preset. It is to be noted that the controller 250 can arbitrarily adjust the positions of each button and each object in the custom arrangement in accordance with a user's operation.

As described above, the mobile terminal 200 can adjust the positions of each button and each object of the pointer screen in accordance with the settings. As a result, it is possible to provide the electronic apparatus and the controlling method for an electronic apparatus having enhanced convenience.

It is to be noted that the mobile terminal 200 is configured to execute the pointer application when the browser is executed in the broadcast reception apparatus 100 as the controlled apparatus in the foregoing embodiment in the above description, but the electronic apparatus and controlling method for electronic apparatus are not restricted to this configuration. The mobile terminal 200 may be configured to execute the pointer application when a function of showing a pointer is executed in the controlled apparatus.

Further, although the broadcast reception apparatus as the example of the controlled apparatus has been described in the foregoing embodiment, the electronic apparatus and controlling method for electronic apparatus are not restricted to this configuration.

Functions described in the above embodiment may be constituted not only with use of hardware but also with use of software, for example, by making a computer read a program which describes the functions. Alternatively, the functions each may be constituted by appropriately selecting either software or hardware.

## Claims

1. An electronic apparatus configured to control an external apparatus, the electronic apparatus **characterized by** comprising:
a communicator (272) configured to communicate with the external apparatus;
a first operation module (235, 261) configured to display a first operation menu in a display and transmit a signal to the external apparatus in accordance with an operation on the first operation menu;
a second operation module (235, 261) configured to display a second operation menu for a pointer operation in the display and transmit a signal to the external apparatus in accordance with an operation on the second operation screen;
a recognition module (250) configured to recognize a state of the external apparatus; and
a controller (250) configured to control in such a manner the first operation module and the second operation module are switched in accordance with a recognition result obtained by the recognition module.

2. The apparatus of claim 1,
**characterized in that** the controller judges whether a pointer operation is required in accordance with the recognition result, and switches to the second operation module it is determined that the pointer operation is required.

3. The apparatus of claim 2,
**characterized in that** the controller judges whether a browser is active in accordance with the recognition result, and switches to the second operation module when it is determined that the browser is active.

4. The apparatus of one of claims 1 to 3, **characterized by** further comprising:
a third operation module configured to display a third operation menu including character input buttons in the display and transmit a signal to the external apparatus in accordance with an operation on the third operation menu,
wherein the controller judges whether a character input box is selected in accordance with the recognition result, and switches to the third operation module when it is determined that the character input box is selected.

5. The apparatus of one of claims 1 to 3,
**characterized in that** the recognition module periodically performs polling with respect to the external apparatus and recognizes a state of the external apparatus based on information received from the external apparatus.

6. The apparatus of one of claims 1 to 3,
**characterized in that** the first operation menu has an execution button that allows the external apparatus to execute a predetermined function, and
the controller switches to the second operation module when the execution button is selected.

7. The apparatus of one of claims 1 to 3,
**characterized in that** the second operation module determines display positions of items included in the second operation menu in accordance with preset settings.

8. The apparatus of one of claims 1 to 3,
**characterized in that** the second modulation module determines items to be displayed in the second modulation menu based on the recognition result.

9. An electronic apparatus configured to operate under control of an external apparatus, **characterized by** comprising:
a communicator (171, 172) configured to communicate with the external apparatus;
a connection module (171, 172, 173) configured to receive an operation signal;
a recognition module (100) configured to recognize a state of the electronic apparatus; and
a controller (150) configured to control an operation of the electronic apparatus in accordance with the operation signal and transmit a recognition result obtained by the recognition module to the external apparatus.

10. The apparatus of claim 9, **characterized by** further comprising:
a browser (150) configured to browse various kinds of information in accordance with the operation signal,
wherein the controller transmits information indicating whether the browser is active to the external apparatus as the recognition result.

11. The apparatus of claim 9, **characterized by** further comprising:
a character input module (100) configured to generate a character string in accordance with the operation signal,
wherein the controller transmits information indicating whether the character input module is active to the external apparatus as the recognition result.

12. A controlling method for an electronic apparatus which comprises: a communicator (272) configured to communicate with an external apparatus; and a display (234) configured to display a screen, and controls the external apparatus, the controlling method **characterized by** comprising:
displaying a first operation menu in the display and transmitting a signal to the external apparatus in accordance with an operation on the first operation menu;
displaying a second operation menu for a pointer operation in the display and transmitting a signal to the external apparatus in accordance with an operation in the second operation menu;
recognizing a state of the external apparatus; and
controlling to switch the first operation menu and the second operation menu in accordance with a result of the recognition.
